# Europäisches Patentamt

(19) **European Patent Office**

**Office européen des brevets**

(11) Publication number: **0 026 191**
**B1**

(12) # EUROPEAN PATENT SPECIFICATION

(45) Date of publication of patent specification: **12.10.83**

(51) Int. Cl.³: **B 29 C 27/04, F 16 L 47/02**

(21) Application number: **80900602.6**

(22) Date of filing: **03.04.80**

(86) International application number:
**PCT/GB80/00062**

(87) International publication number:
**WO 80/02124 16.10.80 Gazette 80/23**

(54) **METHOD FOR JOINING TOGETHER THERMOPLASTICS PIPES AND PIPE FITTINGS.**

(30) Priority: **05.04.79 GB 7912017**

(43) Date of publication of application:
**08.04.81 Bulletin 81/14**

(45) Publication of the grant of the patent:
**12.10.83 Bulletin 83/41**

(84) Designated Contracting States:
**AT DE FR GB NL SE**

(56) References cited:
**FR - A - 2 330 595**
**US - A - 2 393 541**
**US - A - 2 739 829**

**Derwent Abstracts, Soviet-Inventions
Illustrated-Section I Chemical, volume 22,
issued 1974, July 5. (London GB), V. A. Sudnik
et al., "Butt pressure welding machine", see
Metallurgy page 21, Week V 23, the abstract no.
1447985/25—27 of SU, A, 396220**

(73) Proprietor: **BRICKHOUSE DUDLEY PLC
Dudley Road West
Tipton West Midlands DY4 7XD (GB)**

(72) Inventor: **RICE, Nigel Leonard
Epworth Grange Beltoft Road
Epworth, Nr. Doncaster South Yorkshire (GB)**

(74) Representative: **Harrison, Michael Robert et al,
Urquhart-Dykes & Lord Tower House Merrion
Way
Leeds, LS2 8PB (GB)**

(56) References cited:
**Derwent Abstracts, Soviet-Inventions
Illustrated-Section I Chemical, volume 22,
issued 1974, July 5 (London GB), V. P. VOINOV
et al., "Pressure welding process control", see
Metallurgy page 21, Week V 23, the abstract no.
1672110/25—27 of SU A, 396218**

Courier Press, Leamington Spa, England.

## Method for joining together thermoplastics pipes and pipe fittings

This invention relates to methods for joining together thermoplastics materials and in particular to methods for joining pipes or pipe fittings to pipes.

It is known to join a pipe fitting to a pipe end by having a metal heating assembly which is used to heat the fitting and the pipe end, and is then withdrawn so that the heated pipe fitting and pipe end may be brought into contact. The fitting and pipe end may be of the spigot and socket type or they may be such that they are to be butt-welded together.

Such a known method is satisfactory in the case of pipes of relatively small diameters but in the case of large diameter pipes there are certain disadvantages. For instance, it may take a long time to remove the heated assembly after the heating stage due to the large size and weight of the heating assembly. By the time the heating assembly has been removed the heated parts of the pipe and pipe fitting may have cooled down so much that the weld cannot be effected. Furthermore, the presence of such a large heating assembly may make the alignment of the pipe fitting with the pipe rather difficult.

It is also known to join together a pipe fitting to a pipe by means of so-called electro-welding. In this case the fitting has secured thereto a resistance coil or mat which has been moulded into the fitting or is located by a post-machining operation. Production of such fittings by means of a moulding operation is difficult and expensive. Whatever the method of production, the ends of the resistance wire extend from the coil or mat to the exterior of the fitting and can provide a path for crack failure of the fitting.

US—A—2393541 discloses a method for joining together thermoplastic sheets which includes interposing between the sheets a conductive ferromagnetic material having a Curie point within or just above the range of fusion temperature which is applicable for the material or materials being joined together. The ferro magnetic material is subjected to a high frequency magnetic field to cause heating by means of hysteresis effects, and by eddy currents, so that the objects are sealed together. However, this method may result in an overheating of the objects.

US—A—2739829 discloses a method of joining together thermoplastic tubes by using a swelling agent to enlarge one tube end and, after inserting the other tube end into the swollen tube end, permitting evaporation of the swelling agent so as to shrink the swollen end tightly around the other tube end. The strength of the joint may be improved by placing a metallic band between the surfaces to be joined and inducing a current in this band in order to fuse together the contacting surfaces of the tubes.

According to the present invention there is provided a method for joining together two thermoplastic elements, comprising bringing together the elements to be joined, there being an element of electrically conductive ferromagnetic material located between the surfaces to be joined, said electrically conductive material being selected to have a Curie point within the range of fusion temperature which is applicable for the material or materials being joined together, and inducing eddy currents by means of an induction generator in the conductive material to generate sufficient heat to fuse the elements together, characterised in that the elements are selected from pipes and pipe fittings, in that the element of electrically conductive ferromagnetic material is in the form of a perforated strip, and in that the change in the magnetic properties of said conductive material is additionally detected for reducing the output of the induction generator when the temperature reaches the Curie point temperature.

Accordingly the present invention involves the generation of an induced current in conductive material located in the region of the joint. Accordingly there is avoided the need for leads from the exterior of the fitting to the area to be heated. Furthermore the invention enables the heat generated within the conductive material to be controlled. By selecting conductive material with a Curie point within the range of fusion temperatures which are suitable for the materials to be joined together, the heat generated in the region of the joint can be automatically controlled. In particular the conductive material can be formed from an appropriate metal or alloy with a Curie point at or just above the desired welding temperature so that the transformation of the metal or alloy from a ferromagnetic to a paramagnetic can be utilised. Thus if the material reaches a temperature above the Curie point then the amount of heat being generated is immediately reduced and the material cools. The change in the magnetic properties of the material is also detected and when such change takes place the current in the conductive material is reduced by reducing the output of the radio frequency generator. The means for detecting the change in magnetic properties may form part of a system allowing automatic control of the induced current in the conductive material.

A method in accordance with the present invention may be applied to any form of joints between pipes and further pipes or pipe fittings, for instance to spigot and socket type joints and to butt joints as well as saddle joints.

The perforated strip of conductive material may be in the form of a ring surrounding the entire circumference of the inner of the members to be joined together. Alternatively the perforated strip may be incorporated between merely a portion of the circumference of the members being jointed together, for instance, in the case of a pipe of large diameter.

One or more perforated strips of conductive material may be located between the surfaces to be joined. For instance, in the case of a spigot and socket fitting one or more grooves may be cut in the socket of the fitting. Then a ring of conductive material may be fitted in the or each groove.

With the perforated strip of conductive material in position, either located between the two elements to be joined together or affixed or integral with one of these elements, the area to be jointed is surrounded by the work coil of an induction generator. The generator and work coil should be such as to generate a uniform magnetic field throughout the joint area.

The work coil may consist of, for instance, one to ten turns of conductive material, the number of turns being dependent upon the particular application. In a preferred embodiment the work coil is located within a clamp which is used to hold together the elements to be jointed. More preferably the clamp is a split clamp, the two halves of which are fitted with electrically conductive pins and sockets. Accordingly the coil holder not only carries the coil for the generation of the inductive field but also acts to grip the fitting and, either alone or in conjunction with further clamps, "re-rounds" the pipe where the pipe is distorted from true circularity.

Preferably the output frequency is in the region of 10 to 500 KHz, the particular frequency depending upon the specific application.

The perforated strip of conductive material may be a ring of a metal or alloy. The use of perforated material enables the fused plastics material to flow into the holes and so form a strong joint in the region of the conductive material. The perforated strip of conductive material may, for instance, be in the form of a ring which is pre-coated with a suitable polymeric coating to effect a "molecular bond" to the ring and to be compatible for fusion with the material of the pipe and the pipe fitting.

The elements to be joined together may be made of the same or different materials. For instance, one element may be made of one form of polyethylene and the other element may be made of a different polyethylene. Alternatively one element may be made of polyethylene and the other element may be made of polypropylene. Whether the materials are the same or different there will in practice be a range of temperature over which fusion jointing can satisfactorily take place and the conductive material should be chosen so that its Curie point lies within this range. For instance, where the materials to be jointed together are polyethylene, a suitable range may be from 230 to 280°C, preferably from 250 to 270°C. Where the elements to be jointed together are made of polypropylene, the temperature range may suitably be from 250 to 300°C, preferably from 260 to 290°C.

The range of suitable fusion temperature will normally depend upon several factors. Thus the temperature must be above the minimum melt point for the material, or materials, of the elements. However, it must also be sufficiently high for the material to flow to an extent sufficient to effect a good joint. This may depend on the fusion pressure. The fusion pressure may arise due to pressure applied externally through the clamping arrangement and/or to pressure arising due to the expansion of the heated elements within the clamping arrangement.

The fusion temperature should not be above the temperature where degradation of the thermoplastics material takes place. This is a temperature above which the crystallinity of the material is affected.

A particular application of the method of the present invention is in repairing buried pipelines. With current methods of butt fusion or spigot and socket fusion, the pipe ends must be moved axially to form the joint and accordingly considerable excavation of the pipe is required. However, using a method of the present invention, one cut pipe end may be moved radially and a sleeve containing conductive rings may then be slid over this pipe end. The pipe ends are then brought together and the sleeve moved to a central position over the point to be formed. The weld is then effected by inducing currents in the conductive rings.

Embodiments of the present invention will now be described by way of examples only, and with reference to the accompanying drawings, in which:—

Figure 1 is a diagrammatic view illustrating the welding of a T-fitting to a pipe;

Figure 2 is a perspective view showing the method of the invention being applied to the formation of a saddle joint;

Figure 3 is a further persepctive view, in this case from the pipe end of the arrangement illustrated in Figure 2;

Figure 4 is a perspective view showing the application of the method of the present invention to the jointing together of a pipe and a loose socket; and

Figure 5 is a further view of the arrangement of Figure 4 but with the clamp parts in the process of being closed together.

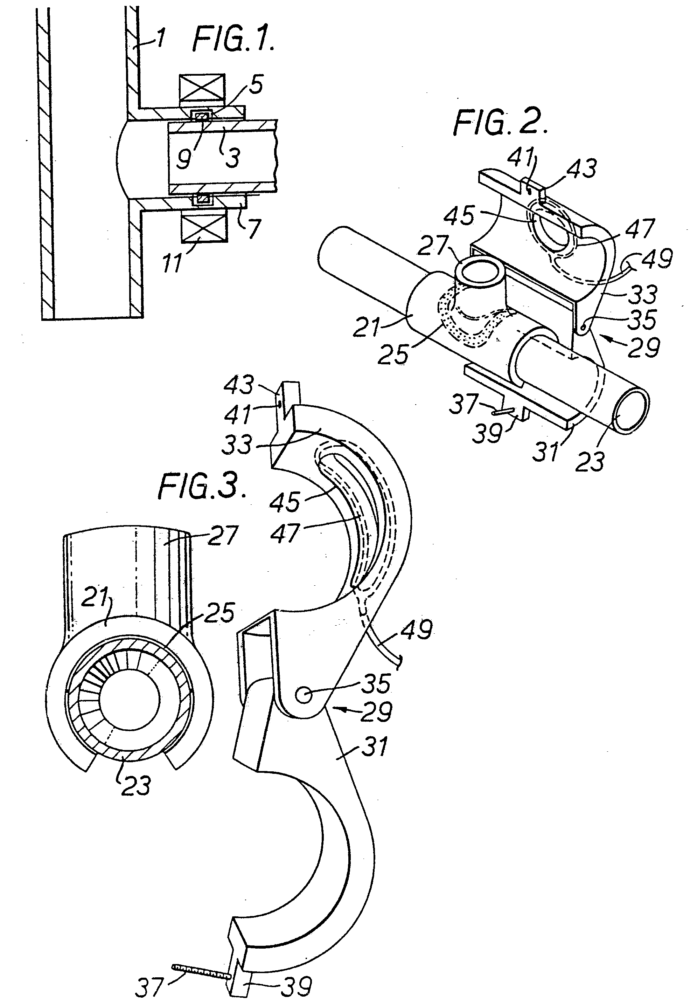

Referring to Figure 1 of the drawings, a T-fitting 1 is intended to make a spigot and socket joint with the end of a pipe 3. An annular groove 5 has been machined into the interior surface of the socket portion 7 of T-fitting 1 and a perforated strip of conductive material in the form of a ring 9 has been located in groove 5. The conductive material 9 is a metal. The metal is a ferromagnetic and has a Curie point within the range of temperature where fusion between T-fitting 1 and pipe 3 satisfactorily takes place.

With the end of pipe 3 located in position in socket portion 7 of T-fitting 1, the work coil 11 of an induction generator is located around the area to be joined together. The generator is then operated to cause a magnetic field, which alternates at a frequency within the range 10 to 500 KHz, to pass through ring 9. This causes an electric current to be generated in the ring 9 so the ring 9 is heated. The ring 9 melts the neighbouring material of socket portion 7 and the end of pipe 3. The induction generator is then switched off and on cooling a uniform weld results.

Should the temperature of the ring 9 exceed the Curie point of the metal, the metal transforms from a ferromagnetic to a paramagnetic and the amount of heat generated is immediately reduced, also by reducing the output of the generator. Accordingly the temperature is automatically controlled so as not to exceed a temperature above which degradation of the polymeric material of the T-fitting 1 and/or the pipe 3 takes place.

The ring 9 may be a ring of perforated ferromagnetic material such as Radiometal. Radiometal is an alloy manufactured by Telcon and is a nickel-iron alloy with about 36% nickel. Strips of Radiometal may be punched to provide the perforations and then the ends butt-welded together to form a loop or ring. This material does not give rise to corrosion problems because of the high nickel content. Radiometal 35 has a Curie point of about 275°C which is appropriate for fusion together of, for instance, a polypropylene T-fitting to a polypropylene pipe.

Referring to Figures 2 and 3 of the accompanying drawings, a saddle 21 of thermoplastics material is to be welded to a pipe 23 made of the same or a similar thermoplastics material. Saddle 21 is located at the desired position on pipe 23 with a shaped ring 25 of perforated ferromagnetic metal lying therebetween. The ring 25 may be either integral or non-integral with saddle 21. It can, for instance, be permanently secured to the saddle 21 by locating the saddle over the ring 25 on the heated mandrel so as to soften the thermoplastics material of the saddle and embed the ring therein.

As illustrated in Figure 2, the ring 25 of ferromagnetic material surrounds the branch portion 27 of the saddle so that it covers the area of the saddle which it is desired to fuse to the pipe 23.

With the saddle 21 and conductive ring 25 in position on pipe 23, a clamp 29 is then applied over saddle 21. Clamp 29 comprises two portions 31, 33 hinged together at 35, the two portions 31, 33 being closable together by means of the location of clamp hold 37, extending from lug 39 of clamp portion 31, through bore 41 of lug 43 which is integral with portion 33 of the clamp. With the clamp 29 in position branch portion 27 protrudes through hole 45 in portion 33 of the clamp. Tightening of bolt 37 will cause the clamp firmly to grip and hold together the pipe 23 and saddle 21.

Located within portion 33 of clamp 29 is an electric coil 47 which may be fed with an electric current by means of cable 49 leading to a generator (not shown). Coil 47 is positioned so that, with the clamp located about pipe 23 and saddle 21, coil 47 overlies the ring 25 of conductive metal.

The Curie point of the metal of ring 25 is in the range of temperature which is suitable for the fusion together of saddle 21 and pipe 23. Accordingly when current is passed through coil 47, the magnetic field generated in ring 25 causes the ring and the surrounding thermoplastics material (of both the saddle 21 and the pipe 23) to heat to fusion temperature. The thermoplastics material of the saddle 21 and pipe 23 flow together and through the perforations in ring 25. If the temperature of ring 25 rises above the Curie point of the material, then the material changes from a ferromagnetic to a paramagnetic and the heat generated decreases, means being provided for detecting the change in magnetic properties of the material, which detecting means are connected to the generator in such a way that its output is reduced when such change occurs. Accordingly there is an automatic control of the fusion temperature.

When heating has taken place for a sufficient time the generator is switched off and, on cooling, a uniform weld results between the saddle 21 and pipe 23.

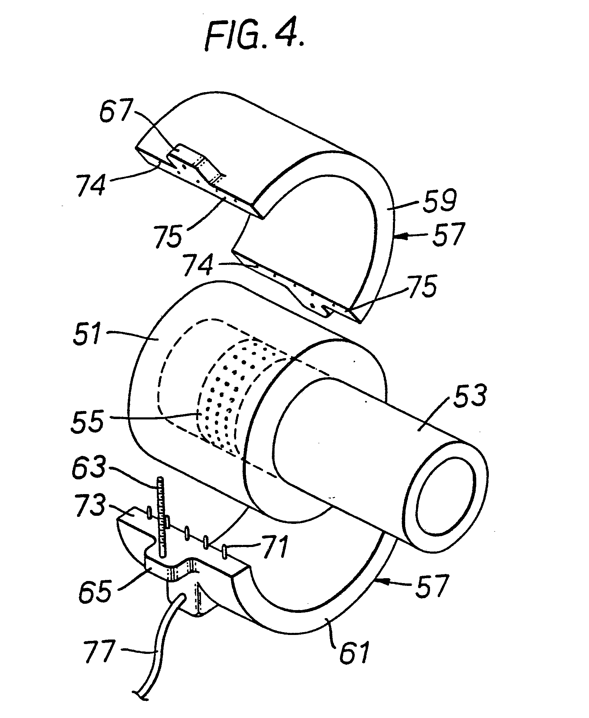

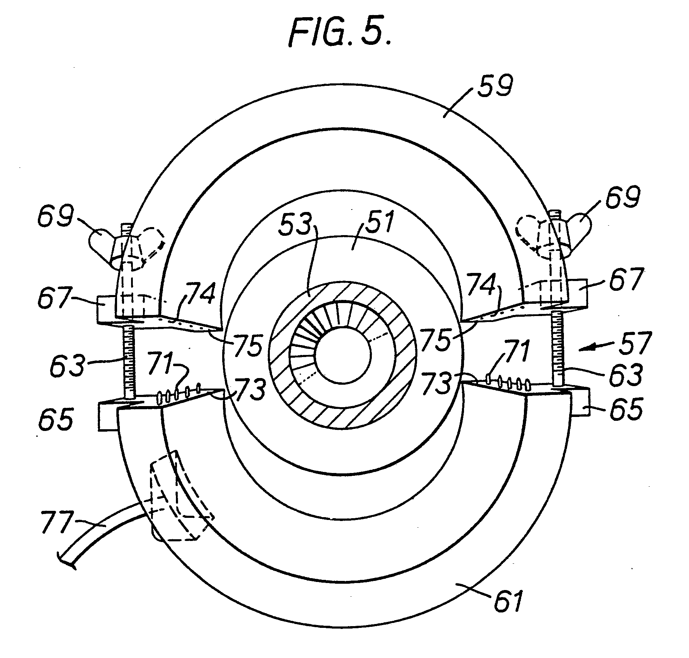

Referring to Figures 4 and 5 of the accompanying drawings, there is illustrated the jointing of a loose socket 51 to a pipe 53. Loose socket 51 has adhered to its inner surface a ring 55 of perforated ferromagnetic metal. In fact socket 51 may be provided with two axially spaced apart rings such as ring 55 so that the socket may be jointed not only to pipe 53 but to a further pipe so as to effect a connection between two pipes.

As in the case of the method described with reference to Figures 2 and 3, a combined clamp and coil holder 57 is used. However, in this case clamp 57 is in the form of two separate half clamps 59 and 61 which may be secured together by means of screws 63 extending from lugs 65 on half clamp 61 through holes in lugs 67 of half clamp 59 and secured by means of ring nuts 69.

Located within clamp 59 is a work coil having five turns, each half clamp 59, 61 carrying five half turns of the work coil. When the half clamps 59, 61 are closed together, conductive pins 71 extending from mating faces 73 of half clamp 61 fit into sockets 74 in mating surfaces 75 of half clamp 59, thereby forming the complete work coil.

With the half clamps 59, 61 mated together about socket 51, the socket 51 and pipe 53 are fusion jointed together in the manner described above in connection with Figures 2 and 3. As in the case of the method described with reference to Figures 2 and 3, the Curie point of the metal of ring 55 is in the range of temperature which is suitable for the fusion together of socket 51 and pipe 53.

## Claims

1. A method for joining together two thermoplastic elements, comprising bringing together the elements (1, 3; 21, 23; 51, 53) to be joined, there being an element of electrically conductive ferromagnetic material (9; 25; 55) located between the surfaces to be joined, said electrically conductive material being selected to have a Curie point within the range of fusion temperature which is applicable for the material or materials being joined together, and inducing eddy currents by means of an induction generator in the conductive material to generate sufficient heat to fuse the elements together, characterised in that the elements are selected from pipes and pipe fittings, in that the element of electrically conductive ferromagnetic material (9; 25; 55) is in the form of a perforated strip, and in that the change in the magnetic properties of said conductive material is detected for reducing the output of the induction generator, when the temperature reaches the Curie point temperature.

2. A method according to claim 1 characterised in that the Curie point of the conductive material (9; 25; 55) lies in the range from 200°C to 300°C.

3. A method according to claim 1 characterised in that the elements (1, 3; 21, 23; 51, 53) to be joined together are made of polyethylene and the Curie point of the conductive material (9; 25; 55) is in the range of from 230 to 280°C.

4. A method according to claim 3 characterised in that the Curie point of the conductive material (9; 25; 55) lies in the range 250 to 270°C.

5. A method according to claim 1 characterised in that the elements (1, 3; 21, 23; 51, 53) to be joined together are made of polypropylene and the Curie point of the conductive material (9; 25; 55) lies in the range 250 to 300°C.

6. A method according to claim 5 characterised in that the Curie point of the conductive material (9; 25; 55) lies in the range of from 260 to 290°C.

7. A method according to any of the preceding claims characterised in that the conductive material (9; 25; 55) is metal.

8. A method according to any of the preceding claims characterised in that the elements to be joined together (21, 23; 51, 53) are held together by clamping means (29), said clamping means also carrying the work coil (47) of the radiofrequency inducing generator.

9. A method according to any of the preceding claims characterised in that the current is induced in the conductive material (9; 25; 55) by means of an induction generator whose output frequency is in the region of 10 to 500 KHz.

## Patentansprüche

1. Verfahren zum Verbinden zweier thermoplastischer Elemente, bei dem man die zu verbindenen Elemente (1, 3; 21, 23; 51, 53) zueinanderbringt, wobei ein Element aus elektrisch leitfähigem, ferromagnetischem Werkstoff (9; 25; 55) zwischen den zu verbindenden Flächen angeordnet wird, wobei der elektrisch leitfähige Werkstoff so ausgewählt wird, daß er einen Curiepunkt besitzt, der im Bereich der Schmelztemperatur liegt, die für den Werkstoff oder die Werkstoffe, die miteinander zu verbinden sind, geeignet ist und bei dem man mit Hilfe eines Induktionsgenerators im leitfähigen Werkstoff Wirbelströme induziert, um genügend Wärme zum Verschmelzen der Elemente zu erzeugen, dadurch gekennzeichnet, daß die Elemente Rohre oder Rohrfittinge sind, daß das Element aus elektrisch leitfähigem, ferromagnetischem Werkstoff (9; 25; 55) die Form eines gelochten Streifens besitzt und daß die Änderung der magnetischen Eigenschaften des leitfähigen Werkstoffes überwacht wird, um die Ausgangsleistung des Induktionsgenerators zu verkleinern, wenn die Temperatur die Temperatur des Curiepunktes erreicht.

2. Verfahren nach Anspruch 1, dadurch gekennzeichnet, daß der Curiepunkt des leitfähigen Werkstoffes (9; 25; 55) im Bereich von 200°C bis 300°C liegt.

3. Verfahren nach Anspruch 1, dadurch gekennzeichnet, daß die Elemente (1, 3; 21, 23; 51, 53), die miteinander zu verbinden sind, aus Polyäthylen bestehen und daß der Curiepunkt des leitfähigen Werkstoffes (9; 25; 55) im Bereich von 230 bis 280°C liegt.

4. Verfahren nach Anspruch 3, dadurch gekennzeichnet, daß der Curiepunkt des leitfähigen Werkstoffes (9; 25; 55) im Bereich 250 bis 270°C liegt.

5. Verfahren nach Anspruch 1, dadurch gekennzeichnet, daß die miteinander zu verbindenden Elemente (1, 3; 21, 23; 51, 53) aus Polypropylen bestehen und daß der Curiepunkt des leitfähigen Werkstoffes (9; 25; 55) im Bereich 250 bis 300°C liegt.

6. Verfahren nach Anspruch 5, dadurch gekennzeichnet, daß der Curiepunkt des leitfähigen Werkstoffes (9; 25; 55) im Bereich von 260 bis 290°C liegt.

7. Verfahren nach einem der vorhergehenden Ansprüche, dadurch gekennzeichnet, daß der leitfähige Werkstoff (9; 25; 55) Metall ist.

8. Verfahren nach einem der vorhergehenden Ansprüche, dadurch gekennzeichnet, daß die miteinander zu verbindenden Elemente (21, 23; 51, 53) durch eine Klemmeinrichtung (29) zusammengehalten werden, wobei die Klemmeinrichtung auch die Arbeitsspule (47) des Radiofrequenzinduktionsgenerators trägt.

9. Verfahren nach einem der vorhergehenden Ansprüche, dadurch gekennzeichnet, daß der Strom im leitfähigen Werkstoff (9; 25; 55) mit Hilfe eines Induktionsgenerators induziert wird, dessen Ausgangsfrequenz im Bereich von 10 bis 500 kHz liegt.

## Revendications

1. Procédé pour relier ensemble deux éléments en une matière thermoplastique qui consiste à rapprocher les éléments (1, 3; 21, 23; 51, 53) devant être assemblés, un élément en une matière ferromagnétique conductrice de l'électricité (9, 25, 55) étant interposé entre les surfaces devant être unies, ladite matière conductrice ayant été choisie de façon à avoir un point de Curie situé à l'intérieur de la gamme des températures de fusion se rapportant à la ou aux matières devant être reliées ensemble et à induire des courants de Foucault au moyen d'un générateur d'induction dans la matière conductrice afin d'engendrer une quantité de chaleur suffisante pour souder ces éléments, caractérisé en ce qu'on choisit ces éléments parmi les tuyaux et les raccords pour tuyaux, en ce que l'élément de matière ferromagnétique conductrice de l'électricité (9, 25, 55) se présente sous la forme d'une bande perforée et en ce que l'on détecte les variations des propriétés magnétiques de ladite matière conductrice afin de réduire la puissance de sortie du générateur d'induction lorsque la température atteint celle du point de Curie.

2. Procédé selon la revendication 1, caractérisé en ce que le point de Curie de la matière conductrice (9, 25, 55) se situe dans la gamme des températures allant de 200°C à 300°C.

3. Procédé selon la revendication 1, caractérisé en ce que les éléments (1, 3; 21, 23; 51, 55) devant être reliés ensemble sont en polyéthylène, tandis que le point de Curie de la matière conductrice (9, 25, 55) se situe entre 230°C et 280°C.

4. Procédé selon la revendication 3, caractérisé en ce que le point de Curie de la matière conductrice (9, 25, 55) est situé entre 250°C et 270°C.

5. Procédé selon la revendication 1, caractérisé en ce que les éléments (1, 3; 21, 23; 51, 53) devant être reliés ensemble sont en polypropylène et en ce que le point de Curie de la matière conductrice (9, 25, 55) se situe entre 250°C et 300°C.

6. Procédé selon la revendication 5, caractérisé en ce que le point de Curie de la matière conductrice (9, 25, 55) est compris entre 260°C et 290°C.

7. Procédé selon l'une quelconque des revendications précédentes, caractérisé en ce que la matière conductrice (9, 25, 55) est un métal.

8. Procédé selon l'une quelconque des revendications précédentes, caractérisé en ce que les éléments devant être reliés ensemble (21, 23; 51, 53) sont tenus par des moyens de serrage (29), lesdits moyens de serrage portant également la bobine active (47) du générateur de haute fréquence.

9. Procédé selon l'une quelconque des revendications précédentes, caractérisé en ce que le courant est induit dans la matière conductrice (9, 25, 55) au moyen d'un générateur dont la fréquence de sortie se situe dans la région comprise entre 10 et 500 kHz.

0 026 191

FIG.1.

FIG.2.

FIG.3.

# FIG. 4.

## FIG. 5.